# FASCICULE DE BREVET EUROPEEN

(11) **EP 0 402 211 B1**
(45) Date de publication et mention de la délivrance du brevet: **08.09.1993**
(21) Numéro de dépôt: 90401478.4
(22) Date de dépôt: 01.06.1990
(51) Int. Cl.: B29C 41/28

(54) **Procédé et disposition de fabrication d'une feuille continue de matière plastique par coulée à l'état liquide sur un support mobile comprenant des plaques de verre juxtaposées**
Verfahren und Anlage zur Herstellung einer kontinuierlichen Kunststoff-Folie durch Giessen im flüssigen Zustand auf einen beweglichen aus sich gegenüberliegenden Glasscheiben bestehenden Träger
Method and arrangement for producing a continuous plastic sheet by pouring in a liquid state onto a moving support comprising juxtaposed glass plates

(30) Priorité: 08.06.1989 FR 8907594
(43) Date de publication de la demande: 12.12.1990
(73) Titulaire: SAINT-GOBAIN VITRAGE INTERNATIONAL, 92400 Courbevoie (FR)
(72) Inventeur: Leyens, Gerd, Dr., D-5100 Aachen (DE); Pikhard, Siegfried M., D-5106 Roetgen (DE); Bartonitschek, Norbert M., D-5190 Stolberg (DE); Martin, Daniel M. Résidence La Vénerie, 60200 - Compiègne (FR); Poix, René Gérard, 60400 Noyon (FR)
(74) Mandataire: Muller, René

(56) Documents cités:
- EP-A- 0 001 465
- EP-A- 0 298 229

## Description

La présente invention concerne un procédé de fabrication d'une feuille continue de matière plastique par coulée à l'état liquide de cette matière ou d'un mélange réactionnel de constituants réactifs conduisant à cette matière sur un support mobile comprenant des plaques de verre disposées bout à bout et supportées par un moyen de convoyage. L'invention concerne également un dispositif pour la mise en oeuvre de ce procédé.

Un tel procédé est décrit par exemple dans le brevet français FR-A- 2395130.

Le matériau déposé à l'état liquide sur la sole mobile constituée par les plaques de verre s'y solidifie en refroidissant, est séparé des plaques en aval du dispositif pour former une feuille continue, laquelle est ensuite enroulée et stockée sous cette forme, pour être ultérieurement découpée en panneaux de dimensions adaptées à l'utilisation envisagée.

Dans la pratique, on réalise par un tel procédé des feuilles en matière plastique destinées à la fabrication de verre de sécurité du type dit asymétrique, formé d'un support rigide, monolithique ou feuilleté comportant, sur l'une de ses faces, une couche de matière plastique transparente, constituée généralement d'un polyuréthane.

Ces vitrages sont utilisés notamment en tant que pare-brise et la couche de matière plastique, tournée vers l'intérieur du véhicule, a diverses fonctions :
- protéger, en cas d'accident, les passagers contre une lacération par les morceaux de verre ;
- le cas échéant agir comme absorbeur d'énergie en cas de choc.

Pour répondre à ces exigences, on utilise en général une feuille à deux couches de matière plastique distinctes, que l'on assemble au support rigide monolithique ou feuilleté en verre, la couche absorbant l'énergie étant appliquée contre le verre, tandis que la couche résistant à la rayure est disposée vers l'intérieur du véhicule.

Il est clair que les feuilles de matière plastique utilisées dans ce but doivent avoir d'excellentes qualités optiques et, pour les réaliser, l'idéal serait de pouvoir les couler sur un ruban continu de verre, par exemple un ruban de verre qui vient juste d'être formé par flottage. Mais ceci est difficilement réalisable dans la pratique. C'est pourquoi on utilise habituellement un train de feuilles de verre d'épaisseur constante, qui sont disposées bord à bord sur un convoyeur continu et qui servent de soie continue pour la coulée du mélange réactionnel. Ces feuilles de verre servent seulement de support pour la formation de la feuille en matière plastique et on les revêt généralement au préalable d'un agent de séparation destiné à éviter l'adhérence au verre de la matière plastique et à faciliter la séparation de celle-ci après solidification.

Pour protéger les tranches des plaques de verre au cours de ce processus, en évitant leur frottement mutuel, et pour prévenir la pénétration de la matière plastique liquide entre les arêtes contiguës, on a proposé d'interposer entre les plaques de verre une bande d'un matériau élastique, par exemple une bande d'un matériau en mousse.

Cette solution présente toutefois l'inconvénient que la matière coulée altère les caractéristiques de la bande intercalaire de mousse, de sorte que, si l'on réutilise les plaques de verre pour un nouveau cycle de coulées, comme c'est habituellement le cas, il est nécessaire de remplacer les bandes souples élastiques par de nouvelles bandes.

Pour éviter cette altération des bandes intercalaires, on aurait pu proposer de les protéger par un ruban adhésif, collé sur les bords contigus de deux plaques successives et chevauchant la tranche de la bande intercalaire. Cette solution n'est malheureusement pas satisfaisante, car le ruban adhésif adhère fermement au verre mais aussi à la matière plastique qui le recouvre et l'arrachage ultérieur de la feuille est rendu difficile avec des risques de déchirure de celle-ci.

La présente invention vise à remédier à cet inconvénient par l'utilisation d'un ruban normalement non adhésif, que l'on ne fait adhérer aux plaques de verre, à l'aide de forces électrostatiques, qu'au moment de la formation de la feuille de matière plastique.

Un but de la présente invention est donc, dans un procédé de fabrication d'une feuille continue de matière plastique comprenant au moins une couche obtenue par coulée de la matière plastique à l'état liquide ou d'un mélange réactionnel des composants réactifs sur la surface d'un support mobile constitué d'un train de plaques de verre disposées bord à bord, de faciliter après la solidification de la couche l'arrachage de la feuille et du ruban de protection qui chevauche les bords continus des plaques de verre tout en protégeant les bandes intercalaires interposées entre celles-ci.

Un autre but de l'invention est, dans un tel procédé, d'utiliser un ruban de protection normalement non adhésif, qui n'est rendu momentanément adhérent aux plaques de verre que juste avant la coulée de matière plastique et dont l'adhérence temporaire disparaît ensuite spontanément.

L'invention a également pour but de proposer un procédé de ce type dans lequel les bandes de matériau souple interposées entre les tranches contiguës des plaques de verre peuvent être réutilisées pour plusieurs cycles de production successifs, après arrachage de la feuille de matière plastique solidifiée.

L'invention a enfin pour but de proposer un appareillage pour la mise en oeuvre de ce procédé qui n'utilise que des moyens connus isolément dans la technique et qui soit donc simple et facile à utiliser.

A cet effet, la présente invention a pour objet un procédé de fabrication d'une feuille continue de matière plastique comportant la formation d'au moins une couche par coulée à l'état liquide de cette matière ou d'un mélange réactionnel de composants réactifs sur un support mobile comprenant des plaques de verre disposées bord à bord et entraînées par un moyen de convoyage, suivie de la solidification de la couche formée sur la surface des plaques de verre et l'arrachage de la feuille solidifiée, ce procédé étant du type dans lequel des bandes de matière souple sont intercalées entre les plaques de verre contiguës, caractérisé en ce que l'on recouvre les bords contigus de verre avant d'effectuer la coulée, par un ruban de protection qui chevauche la tranche de la ou des bandes intercalaires, et qui est en un matériau normalement non adhérent au verre, et en ce que, après avoir été mis en position sur les plaques de verre, il est rendu temporairement adhérent à celles-ci en amont de la coulée à l'état liquide, en chargeant électrostatiquement de charges contraires les plaques de verre, d'une part, et ledit ruban, d'autre part.

L'invention a également pour objet un dispositif de fabrication d'une feuille continue de matière plastique, ce dispositif comprenant :
- un moyen de convoyage apte à entraîner des plaques de verre disposées bord à bord, avec au moins une bande intercalaire d'une matière souple disposée entre leurs bords contigus ;
- un moyen de coulée à l'état liquide sur lesdites plaques de verre de la matière plastique ou d'un mélange réactionnel précurseur de cette matière plastique ;
- un moyen pour la mise en position sur les bords de deux plaques d'un ruban protecteur qui chevauche la bande intercalaire les séparant et qui adhère aux bords contigus des plaques de verre,

ce dispositif étant caractérisé en ce qu'il comprend, en amont du moyen de coulée, dans le sens du déplacement des plaques de verre, des moyens aptes à charger de charges électriques de signes contraires les plaques de verre, d'une part, le ruban disposé sur ces plaques, d'autre part, en vue de rendre temporairement adhérent aux plaques de verre un ruban normalement non adhérent à celles-ci.

Avantageusement, le moyen de mise en place du ruban comprendra un équipage mobile comportant un dévidoir du ruban, un rouleau de calandrage apte à appliquer ce ruban contre la face externe des plaques de verre, perpendiculairement à leur sens de déplacement, un moyen de découpe dudit ruban et un moyen apte à déplacer ledit équipage mobile dans le même sens et à la même vitesse que les plaques de verre, pendant la phase de mise en place du ruban, et à la ramener ensuite à sa position de départ.

Le ruban utilisé dans la mise en oeuvre de l'invention pourra être en une matière plastique telle que les polyesters et le moyen de découpe pourra alors être simplement un fil chaud.

Afin d'éviter que le ruban ne se déroule librement à partir du dévidoir, celui-ci sera avantageusement équipé d'un frein électromagnétique à poudre.

Afin d'assurer un dépôt correct du ruban protecteur sur les feuilles de verre, l'équipage mobile comprendra de préférence une roulette de marouflage du ruban.

Le moyen apte à charger de charges de signes contraires les plaques de verre et le ruban posé sur celles-ci comprendra avantageusement au moins deux barres ionisantes, disposées respectivement de part et d'autre des plaques de verre, transversalement à leur sens de déplacement, et aptes à créer un champ électrostatique tel que des ions positifs soient engendrés au-dessus du ruban, tandis que des ions négatifs sont engendrés au-dessous du verre. Le ruban protecteur déposé sur le verre se changera ainsi positivement et adhérera donc au support de verre, qui se chargera négativement.

De telles barres ionisantes sont bien connues dans la technique et fonctionnent sous des tensions relativement élevées de l'ordre de 6 à 9 kV. Elles permettent donc de rendre temporairement solidaires des plaques de verre les rubans qui protègent les bords de matériau souple séparant les plaques de verre contiguës. Après solidification de la feuille de matière plastique déposée sur les plaques de verre, celle-ci peut être arrachée avec les rubans protecteurs sans nuire aux bandes intercalaires qui séparent les plaques de verre et qui peuvent ainsi être réutilisées pour de nouveaux cycles de fabrication.

On notera que les charges électrostatiques se dissipent naturellement au moment de la coulée de la matière plastique et de sa solidification, sans qu'il soit nécessaire d'utiliser quelque moyen que ce soit dans ce but.

D'autres caractéristiques et avantages de l'invention apparaîtront dans la description détaillée qui va suivre d'une forme de réalisation de l'invention. Dans cette description, on se référera aux dessins annexés, donnés à titre d'exemple non limitatif et sur lesquels :
La figure 1 est une vue schématique partielle en élévation latérale de deux plaques de verre contiguës, illustrant le principe de l'invention ;
La figure 2 est une vue schématique illustrant l'implantation des barres ionisantes ;
Les figures 3, 4 et 5 sont des vues schématiques illustrant trois phases de la pose du ruban protecteur sur les plaques de verre.

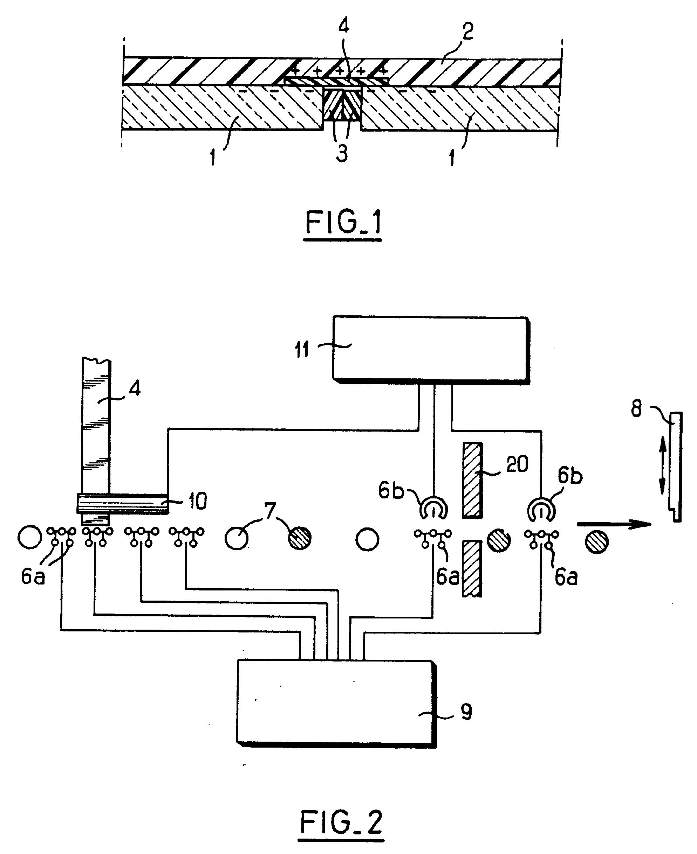

La figure 1 montre la position relative de deux plaques de verre 1 disposées bord à bord et servant de support à une couche 2 de matière plastique, qui a été coulée sur ces plaques. Entre celles-ci sont interposées une ou deux bandes 3 en un matériau souple, par exemple, en un matériau en mousse. Pour isoler les bandes 3 de la couche 2 de matière plastique, un ruban 4, par exemple en polyester, prend appui sur les bords contigus des plaques 1 et chevauche les bandes 3.

Conformément à l'invention, le ruban 4 n'adhère pas spontanément aux plaques 1, mais a été conduit à y adhérer électrostatiquement, avant coulée de la matière plastique, en créant un champ ionisant entre le ruban 4 et les plaques 1, de manière à charger positivement le ruban et négativement les plaques 1.

Comme représenté sur la figure 7, ceci est réalisé en disposant des barres ionisantes 6a et 6b, respectivement, de part et d'autre des plaques de verre, entre les rouleaux 7 de convoyage de celles-ci, en amont de la tête de coulée 8 par laquelle la matière plastique liquide ou le mélange réactionnel conduisant à cette matière est déposée sur les plaques. Les barres ionisantes négatives 6a sont disposées au-dessous des plaques de verre et sont au nombre de six, dans le cas de la forme de réalisation du dessin. Elles ont une longueur utile égale à la largeur des plaques de verre et sont alimentées par un générateur à haute tension 9 sous une tension de 6,5 ou 8 kV suivant les modèles. Quatre des barres 6a sont disposées en position contiguë au-dessous du trajet d'un chariot mobile de pose du ruban 4, lequel, comme il sera décrit ci-après, accompagne les plaques de verre dans leur mouvement, au moment de la pose du ruban, et revient ensuite à sa position de départ pour un nouveau cycle. Ce chariot 10 porte lui-même une barre ionisante positive 6b non représentée, d'une longueur plus faible, car mobile, que les barres 6a, alimentée sous une tension de 24kV à partir d'un générateur à haute tension 11. Une seconde barre ionisante positive 6b de longueur utile semblable à celle des barres 6a est disposée immédiatement en amont du caisson 20 ou s'effectue la régulation thermique du support de coulée, à l'aplomb d'une barre ionisante négative 6a, et une troisième barre ionisante positive 6b est disposée immédiatement en amont de la tête de coulée 8, également à l'aplomb d'une barre ionisante négative 6a.

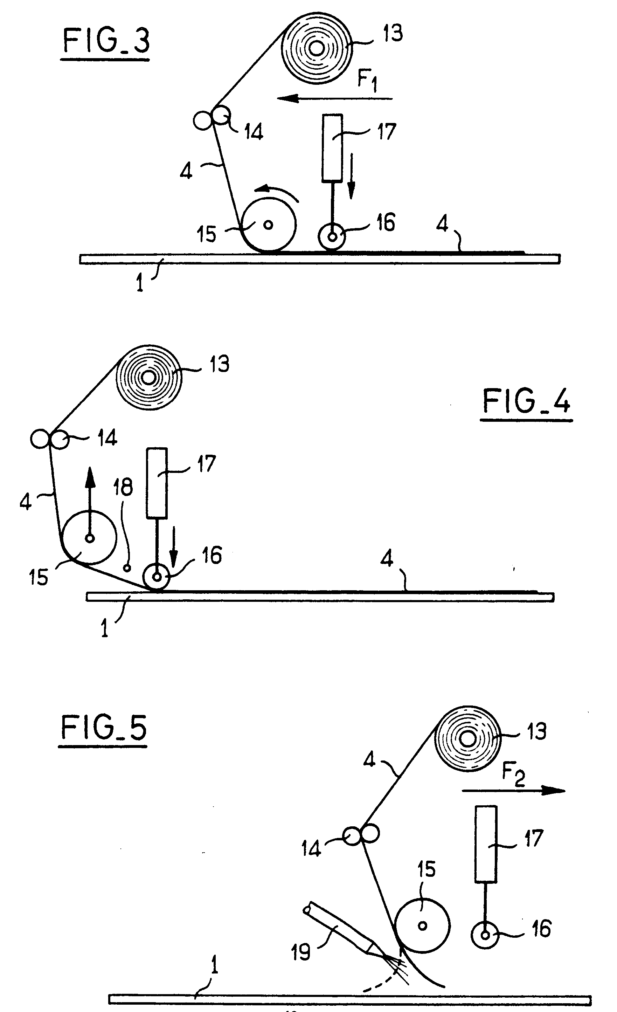

La pose du ruban protecteur 4 sur le bord des plaques de verre contiguës 1 est illustrée par les figures 3 à 5. L'ensemble du système est porté par un chariot, non représenté, mobile dans un plan parallèle aux plaques de verre et susceptible de se déplacer en synchronisme avec celles-ci, dans la même direction et transversalement pour le dépôt du ruban alors que les plaques de verre avancent de façon continue, et de revenir ensuite en sens inverse à sa position de départ.

L'équipage mobile comprend un dévidoir 13, portant une bobine de ruban, à partir de laquelle le ruban 4 est déroulé transversalement à la direction d'avancement des plaques de verre, suivant les bords contigus de celles-ci. Après être passé entre des rouleaux de renvoi 14, il est appliqué contre les bords des plaques 1 par un rouleau 15 mobile verticalement et il est maintenu appliqué contre celles-ci par un rouleau 16 de marouflage, commandé par un vérin 17. Un moyen de découpe tel qu'un fil chauffé est prévu en 18 pour découper le ruban, lorsqu'une longueur suffisante a été déposée.

L'ensemble de l'équipage mobile se déplace suivant la flèche F₁, perpendiculairement à la direction du mouvement des plaques de verre, pendant la phase de pose du ruban 4. Lorsqu'une longueur suffisante de celui-ci a été déposée et séparée du reste de la bobine, les rouleaux 15 et 16 se soulèvent et l'équipage mobile revient à sa position de départ en se déplaçant en sens inverse, suivant la flèche F₂, tandis que le chariot revient également à sa position de départ.

Avantageusement, une buse alimentée en air comprimé sera prévue en 19 sur le chariot pour souffler dans la direction de la flèche F₂ sur l'extrémité libre du ruban 4 déroulé (figure 5), afin d'amener celui-ci dans une position appropriée pour un nouveau cycle de pose du ruban.

Le ruban utilisé pourra être en polyester, par exemple celui commercialisé sous l'appellation HOSTAPHAN. Il pourra avoir une largeur de 50mm et une épaisseur de 23, 36 ou 50 microns, suivant les applications.

Afin de bien maintenir tendu le ruban 4 et de contrôler le dévidage de la bobine, le dévidoir 13 sera avantageusement équipé d'un moyen de freinage, par exemple d'un frein électromagnétique à poudre.

L'invention apporte donc un moyen simple et facile à mettre en oeuvre pour rendre un ruban protecteur temporairement solidaire de deux plaques de verre, disposées bord à bord et destinées à former une sole mobile pour la coulée d'une nappe continue de matière plastique, de manière à protéger de cette matière plastique un joint en matière souple interposé entre les plaques et à permettre la réutilisation des plaques avec le même joint.

## Revendications

1. Procédé de fabrication d'une feuille continue (2) de matière plastique comprenant la formation d'au moins une couche par coulée à l'état liquide de cette matière ou d'un mélange réactionnel de composants réactifs sur un support mobile comprenant des plaques de verre (1) disposées bord à bord et entraînées par un moyen de convoyage (7), suivie de la solidification de la couche formée sur la surface des plaques de verre et l'arrachage de la feuille solidifiée, ce procédé étant du type dans lequel des bandes (3) de matière souple sont intercalées entre les plaques de verre contiguës, et étant caractérisé en ce que l'on recouvre les bords contigus des plaques de verre avant d'effectuer la coulée, par un ruban (4) de protection qui chevauche la tranche de la ou des bandes intercalaires, et qui est en un matériau normalement non adhérent au verre, et, en ce que, après avoir été mis en position sur les plaques de verre, il est rendu temporairement adhérent de celles-ci en amont de la coulée à l'état liquide, en chargeant électrostatiquement de charges contraires les plaques de verre, d'une part, et ledit ruban, d'autre part.

2. Procédé selon la revendication 1, caractérisé en ce que les plaques de verre et le ruban protecteur sont chargés de charges électriques opposées à l'aide de barres ionisantes (6a,6b), disposées de part et d'autre desdites plaques de verre, transversalement à celles-ci.

3. Procédé selon l'une des revendications 1 et 2, caractérisé en ce que ledit ruban (4) est mis en position sur les plaques de verre contiguës (1) par un équipage mobile, qui se déplace dans le même sens que les plaques de verre pendant la phase de pose du ruban et qui revient ensuite en sens inverse à sa position de départ.

4. Procédé selon une des revendications 1 à 3, caractérisé en ce que le ruban (4) est un ruban en polyester.

5. Procédé selon l'une des revendications 2 à 4 en combinaison, caractérisé en ce que l'une au moins desdites barres ionisantes accompagne dans son déplacement ledit élément mobile.

6. Dispositif de fabrication d'une feuille continue de matière plastique, ce dispositif comprenant :
- un moyen de convoyage (7) apte à entraîner des plaques de verre (1) disposées bord à bord, avec au moins une bande intercalaire (3) d'une matière souple disposée entre leurs bords contigus ;
- un moyen (8) de coulée à l'état liquide sur lesdites plaques de verre de la matière plastique ou d'un mélange réactionnel précurseur de cette matière plastique;
ce dispositif étant caractérisé en ce qu'il comprend en amont du moyen de coulée (8) :
- un moyen (10,13) pour la mise en position sur les bords de deux plaques d'un ruban protecteur qui chevauche la bande intercalaire les séparant et qui recouvre les bords contigus des plaques de verre ;
- des moyens (6a,6b) aptes à charger de charges électriques de signes contraires les plaques de verre (1), d'une part, le ruban (4) disposé sur ces plaques, d'autre part, en vue de rendre temporairement adhérent aux plaques de verre un ruban normalement non adhérent à celles-ci.

7. Dispositif selon la revendication 6, caractérisé en ce que les moyens aptes à charger de charges électriques de signes contraires les plaques de verre (1) et le ruban (4) comprend au moins deux barres ionisantes 6a, 6b, disposées de part et d'autre desdites plaques, transversalement à leur sens de déplacement.

8. Dispositif selon l'une des revendications 6 et 7, caractérisé en ce que le moyen de mise en place du ruban (4) comprend un équipage mobile comportant un dévidoir (13) du ruban, un rouleau de calandrage (15) apte à appliquer ce ruban contre la face externe des plaques de verre, perpendiculairement à leur sens de déplacement, un moyen de découpe (18) dudit ruban et un moyen apte à déplacer ledit équipage mobile dans le même sens et à la même vitesse que les plaques de verre, pendant la phase de mise en place du ruban, et à la ramener ensuite à sa position de départ.

9. Dispositif selon la revendication 8, caractérisé en ce que le moyen de découpe du ruban (4) est un fil chaud (18).

10. Dispositif selon l'une des revendication 6 à 7, caractérisé en ce que ledit équipage mobile comprend une roulette (16) de marouflage sous pression du ruban (4) appliquée sur les plaques de verre (1).

11. Dispositif selon la revendication 7 et l'une des revendications 8 à 10 en combinaison, caractérisé en ce que l'une (6b) desdites barres ionisantes est portée par ledit équipage mobile.

12. Dispositif selon la revendication 11, caractérisé en ce qu'il comprend une pluralité de barres ionisantes (6a) disposées au-dessous des plaques de verre à l'aplomb du trajet de l'équipage mobile.

13. Dispositif selon l'une des revendications 11 et 12, caractérisé en ce qu'il comporte des barres ionisantes (6a,6b) en aval du trajet dudit équipage mobile, notamment immédiatement en amont dudit moyen de coulée (8).

## Patentansprüche

1. Verfahren zur Herstellung einer Folienbahn (2) aus Kunstoffmaterial, bei der mindestens eine Schicht durch Aufgießen in flüssigem Zustand dieses Materials oder einer reaktiven Mischung von reaktiven Komponenten auf einen beweglichen Träger gebildet wird, der Glasscheiben (1) aufweist, die Rand an Rand angeordnet sind und durch eine Fördervorrichtung (7) mitgeführt werden, wonach die Aushärtung der auf der Oberfläche der Glasscheiben der gebildeten Schicht und das Abziehen der verfestigten Folie erfolgt, wobei danach Streifen (3) aus biegsamen Material zwischen die angrenzenden Glasscheiben eingelegt werden, **dadurch gekennzeichnet**, daß man die angrenzenden Ränder der Glasscheiben vor dem Aufgießen durch ein Schutzband (4) bedeckt, das der Rand des oder der zwischengefügten Bänder überlappt, und das aus einem normalerweise nicht auf Glas haftenden Material besteht, und daß es, nachdem es auf den Glasscheiben angeordnet ist, vorübergehend auf diesem haftend gemacht wird und zwar stromaufwärts des Aufgusses im flüssigen Zustand durch elektrostatische Aufladung mit Ladung von entgegengesetzten Vorzeichen für die Scheiben einerseits und dem besagten Band andererseits.

2. Verfahren nach Anspruch 1, dadurch gekennzeichnet, daß die Glasscheiben und das Schutzband mit entgegengesetzer elektrischer Ladung geladen sind mit Hilfe von Ionisationsstäben (6a, 6b), die beiderseits der Glasscheiben transversal zu diesen angeordnet sind.

3. Verfahren nach einem der Ansprüche 1 und 2, dadurch gekennzeichnet, daß das Band (4) auf die angrenzenden Glasscheiben (1) aufgebracht wird durch eine bewegliche Einrichtung, die sich in der gleichen Richtung wie die Glasscheiben während der Auftragphase des Bandes bewegt und die anschließend in umgekehrter Richtung zur Ausgangsposition zurückkehrt.

4. Verfahren nach Anspruch 1, dadurch gekennzeichnet, daß das Band (4) ein Band aus Polyester ist.

5. Verfahren nach einem der Ansprüche 2 bis 4, dadurch gekennzeichnet, daß zumindest einer der Ionisationsstäbe die Bewegung des beweglichen Elementes begleitet.

6. Vorrichtung zur Herstellung eines Folienbandes aus Kunstoffmaterial mit einem Fördermittel (7) zur Mitführung der Glasscheiben (1), die hintereinander angeordnet sind, zumindest einem dazwischenliegenden Streifen (3) aus biegsamen Material, der zwischen ihren angrenzenden Ränder angeordnet ist, einer Vorrichtung (8) zum Aufgießen des Kunstoffmaterials oder einer reaktiven Mischung, die zu diesem Kunstoffmaterial führt, im flüssigen Zustand auf die Glasscheiben, **dadurch gekennzeichnet**,
daß die Vorrichtung stromaufwärts der Gießvorrichtung (8)
- eine Einrichtung (10, 13) zur Positionierung eines Schutzbandes auf die Ränder der Scheiben, das den dazwischenliegenden trennenden Streifen überlappt und die angrenzenden Ränder der Glasscheiben überdeckt,
- eine Einrichtung (6a, 6b) umfaßt, welche die Glasscheiben (1) einerseits, und das Band (4), das auf den Glasscheiben aufgebracht ist, andererseits mit elektrischer Ladung mit entgegengesetztem Vorzeichen auflädt, damit das normalerweise nicht auf diesen Glasscheiben haftende Band vorübergehend auf diesen haftend gemacht wird.

7. Vorrichtung nach Anspruch 6, dadurch gekennzeichnet, daß die Einrichtung zur Ladung der elektrischen Ladung mit entgegengesetzten Vorzeichen auf die Glasscheiben (1) und das Band (4) zumindest zwei Ionisationsstäbe (6a und 6b) umfaßt, die transversal zur Bewegungsrichtung an diesen Glasscheiben angeordnet sind.

8. Vorrichtung nach einem der Ansprüche 6 und 7, dadurch gekennzeichnet, daß die Vorrichtung zur Auftragung des Bandes (4) eine bewegliche Einrichtung umfaßt, die eine Spule (13) für das Band, eine Kalanderwalze (15) zum Auftragen des Bandes gegen die Auffenfläche der Glasscheiben senkrecht zu ihrer Bewegungsrichtung einschließt, eine Schneidevorrichtung (18) des Bandes und eine Einrichtung zum Verschieben der beweglichen Einrichtung in die gleiche Richtung und mit der gleichen Geschwindigkeit wie die Glasscheiben während der Phase des Auftragens des Bandes und zur anschließenden Rückführung in die Ausgangsposition.

9. Vorrichtung nach Anspruch 8, dadurch gekennzeichnet, daß die Schneidevorrichtung für das Band (4) ein heißer Draht (18) ist.

10. Vorrichtung nach einem der Ansprüche 6 bis 7, dadurch gekennzeichnet, daß die bewegliche Einrichtung eine Andrückwalze (16) zum Aufpressen des Bandes (4) auf die Glasscheiben (1) umfaßt.

11. Vorrichtung nach Anspruch 7 und einem der Ansprüche 8 bis 10, dadurch gekennzeichnet, daß einer (6b) der Ionisationsstäbe von der beweglichen Einrichtung getragen wird.

12. Vorrichtung nach Anspruch 11, dadurch gekennzeichnet, daß eine Vielzahl von Ionisationsstäben (6a) unter den Glasscheiben senkrecht zu den Schienen der beweglichen Einrichtung angeordnet ist.

13. Vorrichtung nach einem der Ansprüche 11 und 12, dadurch gekennzeichnet, daß sie Ionisationsstäbe (6a, 6b) vor der Bahn der beweglichen Einrichtung hat, insbesondere unmittelbar stromaufwärts der Gießvorrichtung (8).

## Claims

1. Method for the production of a continuous film (2) of plastics material, comprising the forming of at least one layer by casting in the liquid state of this material or of a reaction mixture of reactive components, onto a movable support comprising glass plates (1) disposed edge-to-edge and driven by a conveying means (7), followed by the solidification of the layer formed on the surface of the glass plates and the pulling-off of the solidified film, this method being of the type in which bands (3) of flexible material are inserted between the continuous glass plates and being characterized in that the contiguous edges of the glass plates are covered, before the casting is performed, by a protective strip (4) which rests upon the edge face of the intermediate band or bands, and which is of a material normally not adhesive to glass and in that, after it has been placed in position on the glass plates, it is made temporarily adhesive to these plates upstream of the casting in the liquid state, by electrostatically charging the glass plates, on the one hand, and said strip, on the other hand, with opposite charges.

2. Method according to Claim 1, characterized in that the glass plates and the protective strip are charged with opposite electric charges by means of ionizing bars (6a, 6b), disposed on either side of said glass plates transversely to them.

3. Method according to one of Claims 1 and 2, characterized in that said strip (4) is placed in position on the contiguous glass plates (1) by a movable apparatus, which moves in the same direction as the glass plates during the phase of positioning the strip and which returns afterwards in the opposite direction to its starting position.

4. Method according to one of Claims 1 to 3, characterized in that the strip (4) is a strip of polyester.

5. Method according to one of Claims 2 to 4 in combination, characterized in that at least one of said ionizing bars accompanies said movable element in its displacement.

6. Device for the production of a continuous film of plastics material, this device comprising:
- a conveying means (7) adapted for entraining glass plates (1), disposed edge-to-edge, with at least one intermediate band (3) of a flexible material disposed between their contiguous edges;
- a means (8) for casting in the liquid state onto said glass plates plastics material or a precursor reaction mixture for this plastics material;
this device being characterized in that it comprises, upstream of the casting means (8):
- a means (10, 13) for placing in position on the edges of two plates, a protective strip which rests upon the intermediate band separating the plates and which covers the contiguous edges of the glass plates;
- means (6a, 6b) adapted for charging the glass plates (1), on the one hand, and the strip (4) disposed on these plates, on the other hand, with electrical charges of opposite signs, for the purpose of temporarily making a strip normally non-adhesive to the glass plates adhesive to them.

7. Device according to Claim 6, characterized in that the means adapted for charging the glass plates (1) and the strip (4) with electric charges of opposite signs comprise at least two ionizing bars (6a, 6b) disposed on either side of said plates, transversely to their direction of movement.

8. Device according to one of Claims 6 and 7, characterized in that the means for placing the strip (4) in position comprise s a movable apparatus consisting of an unreeling device (13) for the strip, a calendering roll (15) adapted for applying this strip onto the outer face of the glass plates perpendicularly to their direction of travel, a cutting means (18) for said strip and a means adapted for displacing said movable apparatus in the same direction and at the same speed as the glass plates, during the phase of placing the strip in position, and of bringing it back again afterwards into its starting position.

9. Device according to Claim 8, characterized in that the means for cutting the strip (4) is a hot wire (18).

10. Device according to one of Claims 6 to 7, characterized in that said movable apparatus comprises a roller (16) for taping under pressure the strip (4) applied to the glass plates (1).

11. Device according to Claim 7 and one of Claims 8 to 10 in combination, characterized in that the one (6b) of said ionizing bars is carried by said movable apparatus.

12. Device according to Claim 11, characterized in that it comprises a plurality of ionizing bars (6a) disposed beneath the glass plates vertically underneath the path of the movable apparatus.

13. Device according to one of Claims 11 and 12, characterized in that it comprises ionizing bars (6a, 6b) downstream of the path of said movable apparatus, notably immediately upstream of said casting means (8).
